(19) Europäisches Patentamt
European Patent Office
Office européen des brevets

(11) **EP 4 814 028 A1**

(12) **EUROPEAN PATENT APPLICATION**
published in accordance with Art. 153(4) EPC

(43) Date of publication:
**30.09.2026 Bulletin 2026/40**

(21) Application number: **25741964.8**

(22) Date of filing: **15.01.2025**

(51) International Patent Classification (IPC):
***C08G 18/00*** *(2006.01)* ***C08G 101/00*** *(2006.01)*

(52) Cooperative Patent Classification (CPC):
**C08G 18/00;** C08G 2101/00

(86) International application number:
**PCT/JP2025/001032**

(87) International publication number:
**WO 2025/154739 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024 JP 2024005934**

(71) Applicant: **Tosoh Corporation**
**Shunan-shi, Yamaguchi 746-8501 (JP)**

(72) Inventors:
- **SUZUKI, Keisuke**
  **Ayase-shi, Kanagawa 252-1123 (JP)**
- **ISHIBASHI, Keita**
  **Ayase-shi, Kanagawa 252-1123 (JP)**

(74) Representative: **Novagraaf International SA**
**Chemin de l'Echo 3**
**1213 Onex, Geneva (CH)**

# (54) POLYURETHANE FOAM AND METHOD FOR PRODUCING POLYURETHANE FOAM

(57) A polyurethane foam in which a surface open cell ratio of at least one of mutually opposing principal surfaces is 0.3% or more and 25% or less, and an air permeability measured in accordance with JIS K6400-7:2012 Method B is 0.02 to 7.0 $cm^3/cm^2/sec$.



Processed by Luminess, 75001 PARIS (FR)

## Description

### Technical Field

The present invention relates to a polyurethane foam and a production method of a polyurethane foam.

### Background Art

Polyurethane foams are used in a wide range of applications, including household goods, automobile interior materials, clothing, sports and leisure goods, medical materials, civil engineering and construction materials, and the like. Among such application fields, further reduction of noise through higher performance of soundproofing materials such as sound-absorbing materials and sound-insulating materials is particularly required in transportation vehicles such as automobiles or in buildings such as houses.

In particular, in the field of automobiles, regulatory values for exterior noise regulations are applied, and in the trend toward stricter regulations in the future, reduction of sound in the low- to mid-frequency range (500 to 1200 Hz), such as transmitted engine noise and tire radiated noise, is an urgent issue, and the need for sound-absorbing and sound-insulating materials is growing. In response to these requirements, it is relatively easy to improve soundproofing performance and vibration absorption performance by increasing the thickness of the base material; however, when the base material is thick, there is a concern that sufficient space cannot be secured in transportation vehicles, buildings, or the like. Therefore, it is necessary to improve sound-absorbing and sound-insulating performance while also reducing the thickness of the base material.

Various approaches have conventionally been made as means for improving this sound-absorbing and sound-insulating performance. For example, Patent Literature 1 discloses a sound-absorbing structure characterized by having sound-absorbing properties and/or sound-insulating properties through fine pores in the surface layer, as well as communication paths and acoustic pores.

### Citation List

### Patent Literature

[Patent Literature 1] International Publication No. 2012/008225

### Summary of Invention

### Technical Problem

However, the sound-absorbing structure of Patent Literature 1 cannot be said to have sufficient sound-absorbing properties at low frequencies. In the sound-absorbing structure of Embodiment 1, for which measurement results of sound-absorbing properties are shown, the sound absorption coefficient at less than 2000 Hz when the thickness of the sound-absorbing material is 10 mm is low, and the sound absorption coefficient at 1000 Hz does not even reach 0.2. Note that the surface pore area ratio of this structure based on electron microscope image measurement is stated to be 0.1% to 10%.

Accordingly, an object of the present invention is to provide a polyurethane foam that exhibits high sound-absorbing performance over a wide frequency range, particularly in a frequency range of 2000 Hz or less, even when the base material thickness is small, and that has a low surface open cell ratio, and a production method of the polyurethane foam.

### Solution to Problem

The present invention provides [1] to [9].

[1] A polyurethane foam in which a surface open cell ratio of at least one of mutually opposing principal surfaces is 0.3% or more and 25% or less (which may be 0.5 to 22.0%, 0.5 to 18.0%, 0.5% or more and less than 10%, 0.5 to 9.0%, 0.5 to 8.0%, 1.0 to 22.0%, 1.0 to 18.0%, 1.0% or more and less than 10%, 1.0 to 9.0%, 1.0 to 8.0%, more than 1.0% and 22.0% or less, more than 1.0% and 18.0% or less, more than 1.0% and less than 10%, more than 1.0% and 9.0% or less, more than 1.0% and 8.0% or less, 2.0 to 22.0%, 2.0 to 18.0%, 2.0% or more and less than 10%, 2.0 to 9.0%, 2.0 to 8.0%, 4.0 to 22.0%, 4.0 to 18.0%, 4.0% or more and less than 10%, 4.0 to 9.0%, or 4.0 to 8.0%), and an air permeability measured in accordance with JIS K6400-7:2012 Method B is 0.02 to 7.0 $cm^3/cm^2/sec$ (which may be 0.05 to 7.0

$cm^3/cm^2/sec$, 0.05 to 5.0 $cm^3/cm^2/sec$, 0.05 to 2.5 $cm^3/cm^2/sec$, 0.05 to 1.8 $cm^3/cm^2/sec$, 0.2 to 7.0 $cm^3/cm^2/sec$, 0.2 to 5.0 $cm^3/cm^2/sec$, 0.2 to 2.5 $cm^3/cm^2/sec$, 0.2 to 1.8 $cm^3/cm^2/sec$, 0.5 to 7.0 $cm^3/cm^2/sec$, 0.5 to 5.0 $cm^3/cm^2/sec$, 0.5 to 2.5 $cm^3/cm^2/sec$, or 0.5 to 1.8 $cm^3/cm^2/sec$).

[2] A production method of a polyurethane foam in which a polyurethane foam raw material is reacted inside a mold, the method comprising:

reacting the polyurethane foam raw material in a state in which two or more release agents are interposed between an inner surface of the mold and the polyurethane foam raw material.

[3] The production method according to [2], wherein the mold comprises a pair of dies, and the method comprises:

applying the two or more release agents to an inner surface of at least one of the dies,
introducing the polyurethane foam raw material into the interior of the mold, and
reacting the polyurethane foam raw material.

[4] The production method according to [2] or [3], wherein the two or more release agents comprise a release agent (I) having a melting peak temperature of 40 °C or more and less than 70 °C, and a release agent (II) having a melting peak temperature of 80 °C or more and 130 °C or less.

[5] The production method according to [4], wherein at least one of the release agent (I) and the release agent (II) has two or more melting peak temperatures.

[6] The production method according to [4] or [5], wherein the release agent (I) has two melting peak temperatures and the melting peak temperature on the low-temperature side thereof is 40 °C or more and less than 70 °C, and

the release agent (II) has at least one melting peak temperature between the two melting peak temperatures of the release agent (I).

[7] The production method according to any one of [4] to [6], wherein a mass ratio of the release agent (I) to a total mass of the release agent (I) and the release agent (II) is 0.60 or more and 0.97 or less.

[8] The production method according to any one of [4] to [7], wherein the release agent (I) is a release agent with which a surface open cell ratio of 0% or more and less than 10% can be obtained when a polyurethane foam is produced using only the release agent (I) as the release agent, and

the release agent (II) is a release agent with which a surface open cell ratio of 10% or more and 60% or less can be obtained when a polyurethane foam is produced using only the release agent (II) as the release agent.

[9] The production method according to any one of [2] to [8], wherein the polyurethane foam raw material contains a polyol component (A), a polyisocyanate component (B), a catalyst (C), a foam stabilizer (D), and a blowing agent (E).

## Advantageous Effects of Invention

According to the present invention, there are provided a polyurethane foam that exhibits high sound-absorbing performance over a wide frequency range, particularly in a frequency range of 2000 Hz or less, even when the base material thickness is small, and that has a low surface open cell ratio, and a production method of a polyurethane foam.

Note that, according to [0016] of Patent Literature 1, the term "sound absorption (sound insulation)" is used, and since sound insulation properties are not measured, in the same literature, sound absorption and sound insulation are used synonymously; however, in general, sound absorption is interpreted as the absorption of sound to reduce sound reflection, and sound insulation is interpreted as the reflection of sound to prevent sound leakage. As can be understood from such mechanisms, when the surface open cell ratio is low, it is difficult to achieve high sound-absorbing properties; however, according to the production method of the present invention, a polyurethane foam that exhibits high sound-absorbing performance over a wide frequency range, particularly in a frequency range of 2000 Hz or less, can be obtained despite the low surface open cell ratio. Since the low surface open cell ratio contributes to sound insulation, the production method of the present invention contributes not only to improvement of sound-absorbing properties over a wide frequency range but also to excellent sound insulation.

## Description of Embodiments

The polyurethane foam according to the present embodiment has a surface open cell ratio of at least one of mutually opposing principal surfaces of 0.3% or more and 25% or less, and an air permeability measured in accordance with JIS K6400-7:2012 Method B of 0.02 to 7.0 $cm^3/cm^2/sec$. Note that the surface open cell ratio and air permeability can be measured by the methods described in the Examples.

The above-described polyurethane foam exhibits high sound-absorbing performance over a wide frequency range, particularly in a frequency range of 2000 Hz or less, without significantly impairing sound insulation properties, even when the base material thickness is small. Note that when the surface open cell ratio is low, it is generally difficult to achieve high sound-absorbing properties.

The surface open cell ratio may be 0.5% or more, 1.0% or more, more than 1.0%, 2.0% or more, or 4.0% or more, and may be 22.0% or less, 18.0% or less, less than 10%, 9.0% or less, or 8.0% or less, and may be 0.5 to 22.0%, 0.5 to 18.0%, 0.5% or more and less than 10%, 0.5 to 9.0%, 0.5 to 8.0%, 1.0 to 22.0%, 1.0 to 18.0%, 1.0% or more and less than 10%, 1.0 to 9.0%, 1.0 to 8.0%, more than 1.0% and 22.0% or less, more than 1.0% and 18.0% or less, more than 1.0% and less than 10%, more than 1.0% and 9.0% or less, more than 1.0% and 8.0% or less, 2.0 to 22.0%, 2.0 to 18.0%, 2.0% or more and less than 10%, 2.0 to 9.0%, 2.0 to 8.0%, 4.0 to 22.0%, 4.0 to 18.0%, 4.0% or more and less than 10%, 4.0 to 9.0%, or 4.0 to 8.0%. The surface open cell ratio is more preferably 0.5% or more and 22.0% or less, still more preferably 1.0% or more and 18.0% or less, even more preferably more than 1.0% and less than 10%, and particularly preferably 2.0% or more and 9.0% or less, or 4.0% or more and 8.0% or less.

The air permeability may be 0.05 $cm^3/cm^2/sec$ or more, 0.2 $cm^3/cm^2/sec$ or more, or 0.5 $cm^3/cm^2/sec$ or more, and may be 7.0 $cm^3/cm^2/sec$ or less, 5.0 $cm^3/cm^2/sec$ or less, 2.5 $cm^3/cm^2/sec$ or less, or 1.8 $cm^3/cm^2/sec$ or less, and may be 0.05 to 7.0 $cm^3/cm^2/sec$, 0.05 to 5.0 $cm^3/cm^2/sec$, 0.05 to 2.5 $cm^3/cm^2/sec$, 0.05 to 1.8 $cm^3/cm^2/sec$, 0.2 to 7.0 $cm^3/cm^2/sec$, 0.2 to 5.0 $cm^3/cm^2/sec$, 0.2 to 2.5 $cm^3/cm^2/sec$, 0.2 to 1.8 $cm^3/cm^2/sec$, 0.5 to 7.0 $cm^3/cm^2/sec$, 0.5 to 5.0 $cm^3/cm^2/sec$, 0.5 to 2.5 $cm^3/cm^2/sec$, or 0.5 to 1.8 $cm^3/cm^2/sec$. The air permeability is more preferably 0.05 to 7.0 $cm^3/cm^2/sec$, still more preferably 0.2 to 5.0 $cm^3/cm^2/sec$, even more preferably 0.5 to 2.5 $cm^3/cm^2/sec$, and particularly preferably 0.5 to 1.8 $cm^3/cm^2/sec$.

The air permeability is measured in the foaming direction of the polyurethane foam. Here, the foaming direction refers to the direction in which the thickness increases when the polyurethane foam raw material foams inside the mold, and since the cells formed usually have a shape elongated in the thickness direction (for example, a spindle shape), the foaming direction can be determined from that shape. When a polyurethane foam is molded into a plate shape using a mold, the thickness direction is usually the foaming direction.

The production method of a polyurethane foam according to the embodiment involves reacting a polyurethane foam raw material inside a mold (die), and the polyurethane foam raw material is reacted in a state in which two or more release agents are interposed between the inner surface of the mold and the polyurethane foam raw material.

The polyurethane foam to be produced may be a flexible polyurethane foam, a semi-rigid polyurethane foam, or a rigid polyurethane foam.

A flexible polyurethane foam refers to a reversibly deformable foam having an open-cell structure and exhibiting high air permeability [see, for example, Gunter Oertel, "Polyurethane Handbook" (1985 edition), Hanser Publisher (Germany), pp. 161-233; Keiji Iwata, "Polyurethane Resin Handbook" (first edition, 1987), Nikkan Kogyo Shimbun, Ltd., pp. 150-221].

The physical properties of a flexible polyurethane foam differ depending on chemical factors such as the chemical structures of the polyol and isocyanate used in its production, the blending amount of the blowing agent, and the isocyanate index, as well as the cell structure and the like, making it difficult to specify them specifically; however, in general, the density (which can be measured as apparent density; the same applies hereinafter) is in the range of 10 to 100 $kg/m^3$ (JIS K 6401), the compressive strength (ILD 25%) is in the range of 2 to 80 kgf (20 to 800 N) (JIS K 6401), and the elongation is in the range of 80 to 500% (JIS K 6301) [see, for example, Gunter Oertel, "Polyurethane Handbook" (1985 edition), Hanser Publisher (Germany), pp. 184-191 and pp. 212-218; Keiji Iwata, "Polyurethane Resin Handbook" (first edition, 1987), Nikkan Kogyo Shimbun, Ltd., pp. 160-166 and pp. 186-191].

A semi-rigid polyurethane foam refers to a reversibly deformable foam that, although having a higher foam density and compressive strength than a flexible polyurethane foam, has an open-cell structure and exhibits high air permeability in the same manner as a flexible polyurethane foam, and since the raw materials such as polyol and isocyanate used in its production are also the same as those of a flexible polyurethane foam, it is generally classified as a flexible polyurethane foam in many cases [see, for example, Gunter Oertel, "Polyurethane Handbook" (1985 edition), Hanser Publisher (Germany), pp. 223-233; Keiji Iwata, "Polyurethane Resin Handbook" (first edition, 1987), Nikkan Kogyo Shimbun, Ltd., pp. 211-221]. The physical properties of a semi-rigid polyurethane foam are not particularly limited, but in general, the density is in the range of 40 to 800 $kg/m^3$, the 25% compressive strength is in the range of 0.1 to 2 $kgf/cm^2$ (9.8 to 200 kPa), and the elongation is in the range of 40 to 200%.

A rigid polyurethane foam is a foam having a highly crosslinked closed-cell structure and being irreversibly deformable, and has properties completely different from those of flexible and semi-rigid polyurethane foams [see, for example, Gunter Oertel, "Polyurethane Handbook" (1985 edition), Hanser Publisher (Germany), pp. 234-313; Keiji Iwata, "Polyurethane Resin Handbook" (first edition, 1987), Nikkan Kogyo Shimbun, Ltd., pp. 224-283]. The properties of a rigid foam are not particularly limited, but in general, the density is in the range of 20 to 100 $kg/m^3$ and the compressive strength is in the range of 0.5 to 10 $kgf/cm^2$ (50 to 1000 kPa).

The mold used for producing the polyurethane foam may be composed of any material that has a void for accommodating the polyurethane foam raw material and can withstand the pressure and heat generated by the reaction. The mold is preferably capable of temperature control, and is preferably capable of being heated while accommodating the polyurethane foam raw material to allow the reaction to proceed. Note that urethane formation and foaming proceed by the reaction of the polyurethane foam raw material.

The shape of the polyurethane foam to be produced is defined according to the internal shape (shape of the void) of the mold. Therefore, the internal shape of the mold may be designed so that the desired shape is formed. For example, when it is desired to form a plate-shaped polyurethane foam, the mold may comprise a pair of dies, and the pair of dies may be combined so as to create a rectangular parallelepiped-shaped void.

When the polyurethane foam raw material is reacted, two or more release agents are interposed between the inner surface (inner wall) of the mold and the polyurethane foam raw material. Examples of the interposing method include a method of applying (e.g., coating, spraying, or the like) two or more release agents to the inner surface of the mold before introducing the polyurethane foam raw material into the mold. When the mold comprises a pair of dies, it is preferable to apply two or more release agents to the inner surface of at least one of the dies, introduce the polyurethane foam raw material into the interior of the mold, and react the polyurethane foam raw material. Note that when the release agent contains volatile components such as a medium such as an organic solvent or water in addition to the release component (wax component), it is preferable to volatilize these components before introducing the polyurethane foam raw material into the interior of the mold.

The production method according to the embodiment is characterized by reacting in a state in which two or more release agents are interposed, and "two or more" includes cases where two or more release agents of different chemical species are combined, and cases where two or more release agents of the same chemical species but exhibiting different thermal behavior (for example, different melting peak temperatures) are combined. That is, the polyurethane foam raw material can be reacted in a state in which two or more release agents differing in chemical species and/or melting peak temperature are interposed.

The number of release agents to be combined can be 2 to 5, 2 to 4, or 2 to 3, and the polyurethane foam raw material can be reacted in a state in which two release agents are interposed in order to avoid complicating the release agent composition.

The melting peak temperature of a release agent means a melting peak temperature in accordance with JIS K 7121:1987. That is, a differential scanning calorimetry (DSC) curve is measured, and the temperature at the apex of the melting peak is taken as the melting peak temperature (Tpm). The measurement of the DSC curve can be performed after conditioning as described in the above-mentioned JIS. Specifically, for example, conditioning can be performed by placing a test piece in a container of a DSC apparatus, heating and melting it to a temperature approximately 30 °C higher than the end of the melting peak, holding it at that temperature for 10 minutes, and then cooling it at a cooling rate of 5 °C per minute or 10 °C per minute to a temperature at least approximately 50 °C lower than the transition peak that appears. Then, immediately after conditioning, the apparatus is stabilized and heated at a heating rate of 10 °C per minute to a temperature approximately 30 °C higher than the end of the melting peak, and a DSC curve is drawn. From this DSC curve, the temperature at the apex of the melting peak is identified as the melting peak temperature. When multiple peaks are observed, it is assumed that there are multiple melting peak temperatures. When there are multiple melting peak temperatures, they are referred to in order from the low-temperature side as the first melting peak temperature, the second melting peak temperature, and so on.

The two or more release agents may comprise a release agent (I) having a melting peak temperature of 40 °C or more and less than 70 °C, and a release agent (II) having a melting peak temperature of 80 °C or more and 130 °C or less. At least one of the release agent (I) and the release agent (II) may have two or more melting peak temperatures; however, when a release agent has two or more melting peak temperatures, whether it falls under 40 °C or more and less than 70 °C, or 80 °C or more and 130 °C or less, is determined by the first melting peak temperature (the melting peak temperature on the lowest temperature side).

The release agent (I) may have two melting peak temperatures (a first melting peak temperature and a second melting peak temperature), the melting peak temperature on the low-temperature side (the first melting peak temperature) thereof may be 40 °C or more and less than 70 °C, and the release agent (II) may have at least one melting peak temperature between the first melting peak temperature and the second melting peak temperature of the release agent (I). For example, a case where the release agent (I) has a first melting peak temperature of 50 °C and a second melting peak temperature of 90 °C, and the release agent (II) has a melting peak temperature (first melting peak temperature) of 85 °C corresponds to this.

In the above-described case, the melting peak temperature of the release agent (I) may be 40 °C or more and 65 °C or less, or 40 °C or more and 60 °C or less. The melting peak temperature of the release agent (II) may be 80 °C or more and 120 °C or less, or 80 °C or more and 110 °C or less.

Release agents are usually used by applying to a mold a product obtained by dissolving a material mainly containing paraffin wax, Fischer-Tropsch wax, Sasol wax, microcrystalline wax, modified polyethylene wax, and the like in an organic solvent, or dispersing in water using an emulsifier. Note that a very large number of release agents containing the above-mentioned waxes are available on the market, and since the melting peak temperatures differ according to their chemical species, chemical structures, and the like, the melting peak temperature can be measured in accordance with the above-described measurement method to select one that corresponds to the release agent (I) or the release agent (II). The total application amount of the release agent (I) and the release agent (II) may be 0.3 to 15 $g/m^2$ or 0.5 to 10 $g/m^2$ in terms of

solid content. In the present disclosure, the solid content of the application amount of a release agent refers to a value obtained by dividing the mass (g) obtained by subtracting the mass of the organic solvent and water from the mass of the release agent to be applied by the application area ($m^2$).

The mass ratio of the release agent (I) to the total mass of the release agent (I) and the release agent (II) can be 0.60 or more and 0.97 or less. This mass ratio is preferably 0.80 or more and 0.97 or less, more preferably 0.80 or more and 0.96 or less, still more preferably 0.81 or more and 0.96 or less, even more preferably 0.85 or more and 0.95 or less, and particularly preferably 0.88 or more and 0.92 or less.

The release agent (I) is preferably a release agent with which a surface open cell ratio of 0% or more and less than 10% can be obtained when a polyurethane foam is produced using only the release agent (I) as the release agent, and the release agent (II) is preferably a release agent with which a surface open cell ratio of 10% or more and 60% or less can be obtained when a polyurethane foam is produced using only the release agent (II) as the release agent.

Here, with regard to the release agent (I), it is not necessary that a polyurethane foam having a surface open cell ratio of 0% or more and less than 10% can be produced for every polyurethane foam raw material, and it is sufficient that at least one type of polyurethane foam raw material exists from which such a surface open cell ratio can be obtained. With regard to the release agent (II) as well, it is not necessary that a polyurethane foam having a surface open cell ratio of 10% or more and 60% or less can be produced for every polyurethane foam raw material, and it is sufficient that at least one type of polyurethane foam raw material exists from which such a surface open cell ratio can be obtained.

As the composition of the polyurethane foam raw material for determining a surface open cell ratio of 0% or more and less than 10% or a surface open cell ratio of 10% or more and 60% or less, it is preferable to use the isocyanate component, polyol component, catalyst, foam stabilizer, and blowing agent described in Example 1. The mass ratios can also be implemented as described in Example 1.

Examples of the polyurethane foam raw material to be reacted inside the mold include those containing a polyol component (A), a polyisocyanate component (B), a catalyst (C), a foam stabilizer (D), and a blowing agent (E). The polyurethane foam raw material may contain fillers such as calcium carbonate and barium sulfate, and additives and auxiliary agents such as flame retardants, plasticizers, colorants, and antifungal agents.

The polyol component (A) undergoes polyaddition with the polyisocyanate component (B) to form a polyurethane, and is preferably at least one selected from the group consisting of polyether polyols and polyester polyols. Furthermore, the number-average molecular weight is preferably 1000 to 10000, more preferably 3000 to 8000, and most preferably 4000 to 8000. In addition, those having a nominal number of functional groups of two or more are more preferable.

When the number-average molecular weight is below the lower limit, the flexibility of the resulting foam tends to be insufficient, and when it exceeds the upper limit, the hardness of the foam tends to decrease. Furthermore, when the nominal number of functional groups is less than 2, problems arise such as a significant decrease in the rebound resilience of the foam and failure to return to the original shape when the foam is compressed. Note that the nominal number of functional groups refers to the theoretical average number of functional groups (number of active hydrogen atoms per molecule) assuming that no side reactions occur during the polymerization reaction of the polyol.

As the polyether polyol, for example, polyoxyethylene polyol, polyoxypropylene polyol, polyoxyethylene polyoxypropylene polyol, polytetramethylene ether glycol, and the like can be used, and as the polyester polyol, for example, a polyester polyol composed of adipic acid and a diol, which is a polycondensation-type polyester-based polyol, polycaprolactone polyol, which is a lactone-based polyester polyol, and the like can be used.

From the viewpoint of improving the heat resistance of the foam, at least one polyol selected from the group consisting of castor oil and castor oil-modified polyols can be used in combination in the polyol component (A). Examples of such at least one polyol selected from the group consisting of castor oil and castor oil-modified polyols include derivatives of castor oil such as refined castor oil, semi-refined castor oil, unrefined castor oil, and hydrogenated castor oil to which hydrogen has been added.

In addition, the polyol component (A) can contain a polyether polyol having a polyoxyalkylene chain composed of a copolymer of oxyethylene and oxypropylene for the purpose of promoting the open-cell formation of the polyurethane foam. The number-average molecular weight is preferably 3000 to 8000, and the nominal number of functional groups is preferably 2 to 4. Furthermore, the oxyethylene unit in the polyether polyol is preferably 60 to 90% by mass, and more preferably 60 to 80% by mass.

By setting the oxyethylene unit to 60 to 90% by mass, the durability of the foam can be improved. In addition, from the viewpoint of storage stability at low temperatures, the copolymer composed of oxyethylene and oxypropylene is preferably a random copolymer.

In the polyol component (A), a polymer polyol obtained by polymerizing a vinyl-based monomer in a polyol by a conventional method can be used in combination for the purpose of adjusting hardness. Examples of such a polymer polyol include those obtained by polymerizing a vinyl-based monomer in the presence of a radical initiator in a polyalkylene polyol and stably dispersing the resulting polymer.

Examples of the vinyl-based monomer include acrylonitrile, styrene, vinylidene chloride, hydroxyalkyl metha-

crylate, and alkyl methacrylate, and among these, acrylonitrile and styrene are preferable. Examples of such a polymer polyol include FA-728R, KC-900, and FS-7301 manufactured by Sanyo Chemical Industries, Ltd.

For the polyisocyanate component (B), it is preferable to use, as an isocyanate source, diphenylmethane diisocyanate (hereinafter, MDI) such as 4,4'-diphenylmethane diisocyanate (hereinafter, 4,4'-MDI), 2,4'-diphenylmethane diisocyanate (hereinafter, 2,4'-MDI), and 2,2'-diphenylmethane diisocyanate (hereinafter, 2,2'-MDI), and polyphenylene polymethylene polyisocyanate (hereinafter, P-MDI). In the present invention, the above-described MDI, a mixture of MDI and P-MDI, and various modified products such as urethane-modified products, urea-modified products, allophanate-modified products, nurate-modified products, and biuret-modified products can also be used.

The MDI content of the polyisocyanate component (B) is preferably in the range of 50 to 85% by mass. When the MDI content exceeds 85% by mass, the storage stability at low temperatures of the resulting polyisocyanate composition and the durability of the resulting foam may decrease, while when it is less than 50% by mass, the elongation of the polyurethane foam may decrease due to an increase in crosslink density, making it difficult to obtain sufficient foam strength.

Furthermore, the sum of the content of 2,2'-MDI and the content of 2,4'-MDI relative to the total amount of MDI (hereinafter, isomer content) is preferably 10 to 50% by mass.

When the content of 2,2'-MDI and 2,4'-MDI relative to the total amount of MDI is less than 10% by mass, the storage stability at low temperatures of the resulting polyisocyanate composition may be impaired, and constant heating of the isocyanate storage location, piping, and the interior of the foaming machine may be required. In addition, the molding stability of the polyurethane foam may be impaired, and foam collapse or the like during foaming may occur. On the other hand, when it exceeds 50% by mass, reactivity may decrease, leading to problems such as extension of the molding cycle, an increase in the closed-cell ratio of the foam, and shrinkage after molding.

As the catalyst (C), various urethanization catalysts can be used, and examples thereof include triethylamine, tripropylamine, tributylamine, N-methylmorpholine, N-ethylmorpholine, dimethylbenzylamine, N,N,N',N'-tetramethylhexamethylenediamine, N,N,N',N',N''-pentamethyldiethylenetriamine, bis-(2-dimethylaminoethyl) ether, triethylenediamine, 1,8-diaza-bicyclo[5.4.0]undecene-7, 1,2-dimethylimidazole, dimethylethanolamine, N,N-dimethyl-N-hexanolamine, organic acid salts thereof, and organometallic compounds such as stannous octoate and zinc naphthenate. In addition, amine catalysts having active hydrogen, such as N,N-dimethylethanolamine and N,N-diethylethanolamine, are also preferable.

The amount of the catalyst added is preferably 0.01 to 10% by mass relative to the polyol component (A). When below the lower limit, curing tends to be insufficient, and when exceeding the upper limit, moldability may deteriorate.

As the foam stabilizer (D), ordinary surfactants are used, and silicone-based surfactants can be suitably used. Examples thereof include SZ-1327, SZ-1325, SZ-1336, and SZ-3601 manufactured by Dow Toray Co., Ltd., Y-10366J and L-5309J manufactured by Momentive Performance Materials Inc., and B-8724LF2 and B-8715LF2 manufactured by Evonik Industries AG. The amount of these foam stabilizers added is preferably 0.1 to 3.0% by mass relative to the polyol component (A).

As the blowing agent (E), water is mainly used, and the blowing agent may comprise water alone. Water forms highly hard urea groups by reacting with isocyanate groups and simultaneously generates carbon dioxide gas, thereby enabling foaming. In addition, any blowing agent may be used in addition to water. For example, a small amount of a low-boiling-point organic compound such as cyclopentane or isopentane may be used in combination, or air, nitrogen gas, or liquefied carbon dioxide may be mixed and dissolved in the stock solution using a gas loading device to cause foaming.

The amount of the blowing agent (E) added is usually 0.5 to 10% by mass relative to the polyol component (A); however, when obtaining a low-density polyurethane foam having an apparent density of 25 kg/m$^3$, it is preferably 4.0 to 7.0% by mass, and more preferably 4.0 to 6.5% by mass. When exceeding the upper limit, foaming may become difficult to stabilize, and when below the lower limit, the density of the foam may not be sufficiently reduced.

The NCO INDEX (the molar ratio of NCO to active hydrogen multiplied by 100) at the time of mixing and foaming of all isocyanate groups in the polyisocyanate component (B) with all active hydrogen groups in the polyol component (A) and the blowing agent (E) is preferably 70 to 140, and more preferably 70 to 120 as a range with a good molding cycle.

When the NCO INDEX is less than 70, the closed-cell ratio of the foam may become excessively high, and when it is higher than 120, problems such as extension of the molding cycle due to long-term residual unreacted isocyanate and foam collapse during foaming due to delayed high-molecular-weight formation may occur.

In the production of a polyurethane foam, the mold temperature when injecting the polyurethane foam raw material into the mold is usually 30 to 80 °C, and preferably 45 to 70 °C. When the mold temperature when injecting the above-described foaming stock solution into the mold is less than 30 °C, there is a risk of extending the production cycle due to a decrease in reaction rate, while when it is higher than 80 °C, the reaction of water with isocyanate may be excessively promoted relative to the reaction of polyol with isocyanate, and the foam may collapse during foaming.

The curing time for foaming and curing the polyurethane foam raw material is preferably 15 minutes or less, and more preferably 10 minutes or less, taking into account the production cycle of a general molded foam. After the polyurethane foam raw material is foamed and cured, the cured raw material can be demolded from the mold to obtain a

molded polyurethane foam.

When producing a polyurethane foam, the polyurethane foam raw material can be mixed using a high-pressure foaming machine, a low-pressure foaming machine, or the like, in the same manner as in the case of a general molded foam.

The polyol component (A) and the polyisocyanate component (B) are preferably mixed immediately before foaming. Other components can be premixed with the polyol component (A) or the polyisocyanate component (B) within a range that does not affect the storage stability of the raw materials or the change over time in reactivity. These mixtures may be used immediately after mixing, or may be stored and then used as needed in the required amount. In the case of a foaming apparatus capable of simultaneously introducing more than two components into the mixing section, the polyol, blowing agent, polyisocyanate, catalyst, foam stabilizer, and the like can also be individually introduced into the mixing section.

In addition, the mixing method may be either dynamic mixing, in which mixing is performed in the machine head mixing chamber of the foaming apparatus, or static mixing, in which mixing is performed in the liquid feed piping, or both may be used in combination. In many cases, mixing of gaseous components such as physical blowing agents with liquid components is performed by static mixing, and mixing of components that can be stably stored as liquids is performed by dynamic mixing. The foaming apparatus is preferably a high-pressure foaming apparatus that does not require solvent cleaning of the mixing section.

After demolding the polyurethane foam, the cell membranes of the polyurethane foam may be broken under compression or reduced pressure by a known method. By breaking the cell membranes, the air permeability of the polyurethane foam can be increased.

The polyurethane foam obtained by the above-described production method exhibits high sound-absorbing performance over a wide frequency range, particularly in a frequency range of 2000 Hz or less, without significantly impairing sound insulation properties, even when the base material thickness is small. Note that when the surface open cell ratio is low, it is generally difficult to achieve high sound-absorbing properties.

Here, a base material thickness (thickness of the polyurethane foam) of 10 mm can be said to be sufficiently thin, and a surface open cell ratio of 25% (preferably 20%, and further 18%) or less and 0% or more can be said to be a low surface open cell ratio. A polyurethane foam having a low surface open cell ratio is excellent in sound insulation. In addition, when the average sound absorption coefficient at 500 to 2000 Hz is 0.35 or more, it can be said that high sound-absorbing performance is exhibited in the frequency range of 2000 Hz or less. The polyurethane foam obtained by the production method according to the present embodiment exhibits an average sound absorption coefficient at 500 to 2000 Hz of 0.35 or more even when the surface open cell ratio is 25% or less when the thickness is 10 mm. Therefore, it can be utilized in various applications as a sound-absorbing material and a sound-insulating material. Note that the sound-absorbing properties and surface open cell ratio can be measured by the methods described in the Examples.

[Examples]

Hereinafter, the present invention will be described more specifically based on Examples and Comparative Examples; however, the present invention is not limited to the following Examples. Note that unless otherwise specified, "parts" and "%" in the text are on a mass basis.

(Examples 1 to 4, Comparative Examples 1 to 6)

[Preparation of Polyol Composition]

After purging a reactor equipped with a stirrer, a cooling tube, a nitrogen inlet tube, and a thermometer with nitrogen, 60 g of polyol 1, 40 g of polyol 2, 1.0 g of polyol 3, 0.7 g of catalyst 1, 0.1 g of catalyst 2, 1.0 g of foam stabilizer 1, and 2.0 g of water were charged, and the mixture was stirred at 23 °C for 0.5 hours to obtain a polyol composition (P-1).

[Preparation of Release Agent]

After purging a sealable plastic container with nitrogen, 7.76 g of release agent A and 0.24 g of release agent B were charged into the container, and the container was sealed. The mixture was stirred at 23 °C for 0.5 hours using a mixing roller to obtain release agent 4. By the same method, release agent 5 was obtained using 7.2 g of release agent A and 0.8 g of release agent B, release agent 6 was obtained using 6.4 g of release agent A and 1.6 g of release agent B, and release agent 7 was obtained using 4.8 g of release agent A and 3.2 g of release agent B.

[Mold Molding Conditions]

The liquid temperatures of the isocyanate composition and the mixture of all raw materials other than the isocyanate composition (polyol composition) were each adjusted to 24 °C to 26 °C. A predetermined amount of the polyisocyanate component was added to the polyol composition, and the resulting mixture was mixed with a mixer (7000 rpm) for 7 seconds, and then injected into a mold coated with a release agent to foam the polyurethane foam. Note that in the Examples and Comparative Examples, the types of release agents shown in Tables 1 and 2 were used.

Mold temperature: 50 to 65 °C
Mold shape (rectangular parallelepiped): 200 mm × 200 mm × 10 mm
Mold material: aluminum
Curing time: 10 minutes

After the polyurethane foam was cured, the polyurethane foam was demolded to obtain a polyurethane foam molded article. Note that the polyurethane foam of Comparative Example 5 could not be demolded, and a molded article could not be obtained.

For the polyurethane foam molded article of Comparative Example 4, the obtained polyurethane foam molded article was compressed to break the cell membranes and adjust the air permeability.

[Raw Materials Used]

· Polyol 1: Polyoxyethylene polyoxypropylene polyol having an average number of functional groups = 3.0 and a hydroxyl value = 33 (mgKOH/g), Exenol 823 (trade name) manufactured by AGC Inc.
· Polyol 2: Refined castor oil having an average number of functional groups = 2.7 and a hydroxyl value = 160 (mgKOH/g) (URIC H-24, manufactured by Itoh Oil Chemicals Co., Ltd.)
· Polyol 3: Polyoxyethylene polyoxypropylene polyol having an average number of functional groups = 4.0, a hydroxyl value = 28 (mgKOH/g), and an oxyethylene unit in the polyether polyol of 80% by mass, NEF-024 (trade name) manufactured by Tosoh Corporation
· Catalyst 1: 33% dipropylene glycol solution of triethylenediamine (manufactured by Tosoh Corporation, trade name: TEDA L-33)
· Catalyst 2: 70% dipropylene glycol solution of bis(2-dimethylaminoethyl) ether (manufactured by Tosoh Corporation, trade name: TOYOCAT ET)
· Foam stabilizer 1: Silicone-based foam stabilizer (manufactured by Momentive Performance Materials Inc., trade name: L-5309J)
· Isocyanate 1: Polyphenylene polymethylene polyisocyanate having an MDI content of 70% by mass and an isomer content of 17.7% by mass (manufactured by Tosoh Corporation, trade name: CEF-538)
· Release agent 1: Branched-chain wax-based release agent, first melting peak 50.4 °C, second melting peak 91.4 °C, product name: M975, manufactured by Chukyo Yushi Co., Ltd.
· Release agent 2: Linear-chain wax-based release agent, first melting peak 87.8 °C, second melting peak 99.5 °C, product name: T-626, manufactured by Chukyo Yushi Co., Ltd.
· Release agent 3: Branched-chain wax-based release agent, first melting peak 80.4 °C, second melting peak 118.7 °C, product name: FRX-C8, manufactured by Neos Co., Ltd.
· Release agent 4: Release agent obtained by mixing release agent 1 and release agent 2 at a weight ratio of 97:3
· Release agent 5: Release agent obtained by mixing release agent 1 and release agent 2 at a weight ratio of 90:10
· Release agent 6: Release agent obtained by mixing release agent 1 and release agent 2 at a weight ratio of 80:20
· Release agent 7: Release agent obtained by mixing release agent 1 and release agent 2 at a weight ratio of 60:40

[Apparent Density]

The apparent density of the polyurethane foam molded article was determined by the method described in JIS K 6400-1:2004.

[Thickness of Urethane Foam]

The thickness of the polyurethane foam molded article was measured using a caliper (Digital Caliper BDC200, manufactured by AS ONE Corporation).

[C Hardness]

The thickness of the polyurethane foam molded article was measured using a rubber hardness tester (Asker C type) described in JIS K7312:1996.

[F Hardness]

The F hardness of the polyurethane foam molded article was measured using an Asker rubber hardness tester type F.

[Air Permeability]

The air permeability of the polyurethane foam molded article was measured by the method described in JIS K6400-7:2012 Method B.

[Average Cell Diameter]

The average cell diameter of each polyurethane foam molded article was determined by punching out a 10 mm-thick polyurethane foam molded article into a disk shape with a diameter of 28.8 mm, photographing an image of the side surface of the foam with a field of view of 10 mm in height and 16.3 mm in width using a microscope equipped with a lens MTL5518C-034-01 manufactured by Moritex Corporation, measuring the cell diameter for a predetermined number of cells present in the field of view, and calculating the simple average of the cell diameters.

[Surface Open Cell Ratio]

The surface open cell ratio of each polyurethane foam molded article was determined by punching out a 10 mm-thick polyurethane foam molded article into a disk shape with a diameter of 28.8 mm, photographing an image of the surface that was in contact with the upper die of the mold during molding, the image having a diameter of 28.8 mm, using a microscope equipped with a telecentric lens MM014-HR110-5M manufactured by Moritex Corporation, binarizing the above-described image into open cell portions and other surface layer portions using software "ImageJ", calculating the total area of the open cell portions, and then calculating the surface open cell ratio based on the following calculation formula.

Surface open cell ratio = (total area of open cell portions / sample area) × 100 ... (Formula). (Formula).

[Sound Absorption Coefficient]

Based on the method described in JIS A 1405-2:2007, the normal incidence sound absorption coefficient at 500 to 6300 Hz was measured using a 4206-type acoustic tube manufactured by Hottinger Brüel & Kjær Japan. The sound absorption coefficient was measured by placing a polyurethane foam molded article with a diameter of 28.8 mm and a thickness of 10 mm such that the surface molded by the lower die of the mold faced the sound source side, under conditions in which no air layer was provided behind the polyurethane foam molded article.

[Moldability]

The moldability of each urethane foam molded article was evaluated according to the following evaluation criteria. Note that in Comparative Example 5, the polyurethane foam molded article could not be demolded.

<Evaluation Criteria>

A: There is no significant difference between the shape of the polyurethane foam molded article and the shape of the inner surface of the mold, and there is no deformation, tearing, or defect during demolding.
B: There is a significant difference between the shape of the polyurethane foam molded article and the shape of the inner surface of the mold, or any of deformation, tearing, and defect occurs during demolding.

[Table 1]

| | | | Example 1 | Example 2 | Example 3 | Example 4 |
|---|---|---|---|---|---|---|
| | Isocyanate composition No. | | I-1 | I-1 | I-1 | I-1 |
| | Polyisocyanate component (B) | Isocyanate 1 | 100 | 100 | 100 | 100 |
| Polyol composition | Polyol composition No. | | P-1 | P-1 | P-1 | P-1 |
| | Polyol component (A) | Polyol 1 | 60 | 60 | 60 | 60 |
| | | Polyol 2 | 40 | 40 | 40 | 40 |
| | | Polyol 3 | 1.0 | 1.0 | 1.0 | 1.0 |
| | Catalyst (C) | Catalyst 1 | 0.70 | 0.70 | 0.70 | 0.70 |
| | | Catalyst 2 | 0.10 | 0.10 | 0.10 | 0.10 |
| | Foam stabilizer (D) | Foam stabilizer 1 | 1.0 | 1.0 | 1.0 | 1.0 |
| | Blowing agent (E) | Water | 2.0 | 2.0 | 2.0 | 2.0 |
| | Type and application amount of release agent (solid content) | Release agent 1 (g/m$^2$) | - | - | - | - |
| | | Release agent 2 (g/m$^2$) | - | - | - | - |
| | | Release agent 3 (g/m$^2$) | - | - | - | - |
| | | Release agent 4 (g/m$^2$) | - | 0.8 | - | - |
| | | Release agent 5 (g/m$^2$) | 0.8 | - | - | - |
| | | Release agent 6 (g/m$^2$) | - | - | 0.8 | - |
| | | Release agent 7 (g/m$^2$) | - | - | - | 8 |
| | Mold temperature ( °C) | | 60 | 60 | 60 | 60 |
| | NCO INDEX | | 80 | 80 | 80 | 80 |
| Foam physical properties | Apparent density | (kg/m$^3$) | 108 | 107 | 111 | 111 |
| | Urethane foam thickness | (mm) | 10 | 10 | 10 | 10 |
| | C hardness | (-) | <1 | <1 | <1 | <1 |
| | F hardness | (-) | 60 | 60 | 60 | 60 |
| | Air permeability | (cm$^3$/cm$^2$/sec) | 0.5 | 0.03 | 2.0 | 1.3 |
| | Presence/absence of air permeability adjustment | (-) | None | None | None | None |
| | Average cell diameter | (μm) | 520 | 520 | 520 | 520 |
| | Surface open cell ratio | (%) | 6 | 0.4 | 16 | 21 |
| | 500-2000Hz average sound absorption coefficient | (-) | 0.42 | 0.40 | 0.37 | 0.38 |
| | 2000-4000Hz average sound absorption coefficient | (-) | 0.61 | 0.42 | 0.43 | 0.49 |
| | 4000-6300Hz average sound absorption coefficient | (-) | 0.47 | 0.32 | 0.47 | 0.41 |
| | Moldability | | A | A | A | A |

[Table 2]

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| | Isocyanate composition No. | | I-1 | I-1 | I-1 | I-1 | I-1 | I-1 |
| | Polyisocyanate component (B) | Isocyanate 1 | 100 | 100 | 100 | 100 | 100 | 100 |
| Polyol composition | Polyol composition No. | | P-1 | P-1 | P-1 | P-1 | P-1 | P-1 |
| | Polyol component (A) | Polyol 1 | 60 | 60 | 60 | 60 | 60 | 60 |
| | | Polyol 2 | 40 | 40 | 40 | 40 | 40 | 40 |
| | | Polyol 3 | 1.0 | 1.0 | 1.0 | 1.0 | 1.0 | 1.0 |
| | Catalyst (C) | Catalyst 1 | 0.70 | 0.70 | 0.70 | 0.70 | 0.70 | 0.70 |
| | | Catalyst 2 | 0.10 | 0.10 | 0.10 | 0.10 | 0.10 | 0.10 |
| | Foam stabilizer (D) | Foam stabilizer 1 | 1.0 | 1.0 | 1.0 | 1.0 | 1.0 | 1.0 |
| | Blowing agent (E) | Water | 2.0 | 2.0 | 2.0 | 2.0 | 2.0 | 2.0 |
| | Type and application amount of release agent (solid content) | Release agent 1 ($g/m^2$) | 8 | - | - | - | - | 2.0 |
| | | Release agent 2 ($g/m^2$) | - | 8.1 | - | - | - | - |
| | | Release agent 3 ($g/m^2$) | - | - | 0.8 | - | - | - |
| | | Release agent 4 ($g/m^2$) | - | - | - | - | - | - |
| | | Release agent 5 ($g/m^2$) | - | - | - | 0.8 | - | - |
| | | Release agent 6 ($g/m^2$) | - | - | - | - | - | - |
| | | Release agent 7 ($g/m^2$) | - | - | - | - | - | - |
| | Mold temperature ( °C) | | 60 | 60 | 60 | 60 | 60 | 60 |
| | NCO INDEX | | 80 | 80 | 80 | 80 | 80 | 80 |
| Foam physical properties | Apparent density | ($kg/m^3$) | 110 | 110 | 106 | 110 | - | 104 |
| | Urethane foam thickness | (mm) | 10 | 10 | 10 | 10 | - | 10 |
| | C hardness | (-) | <1 | <1 | <1 | <1 | - | <1 |
| | F hardness | (-) | 60 | 60 | 60 | 60 | - | 60 |
| | Air permeability | ($cm^3/cm^2/sec$) | 0.8 | 5.8 | 0.02 | 10 | - | 0.01 |
| | Presence/absence of air permeability adjustment | (-) | None | None | None | Yes | - | None |
| | Average cell diameter | (μm) | 520 | 520 | 520 | 520 | - | 520 |
| | Surface open cell ratio | (%) | 0.1 | 27 | 0.1 | 6 | - | 0.1 |
| | 500-2000Hz average sound absorption coefficient | (-) | 0.32 | 0.32 | 0.30 | 0.33 | - | 0.32 |
| | 2000-4000Hz average sound absorption coefficient | (-) | 0.33 | 0.68 | 0.35 | 0.84 | - | 0.31 |
| | 4000-6300Hz average sound absorption coefficient | (-) | 0.27 | 0.67 | 0.28 | 0.76 | - | 0.28 |
| | Moldability | | A | A | A | A | Demolding impossible | A |

As shown in Examples 1, 2, 3 and 4 in Table 1, it is possible to adjust the surface open cell ratio by changing the mixing ratio of the two release agents.

## Claims

1. A polyurethane foam in which a surface open cell ratio of at least one of mutually opposing principal surfaces is 0.3% or more and 25% or less, and an air permeability measured in accordance with JIS K6400-7:2012 Method B is 0.02 to 7.0 $cm^3/cm^2/sec$.

2. A production method of a polyurethane foam in which a polyurethane foam raw material is reacted inside a mold, the method comprising:
reacting the polyurethane foam raw material in a state in which two or more release agents are interposed between an inner surface of the mold and the polyurethane foam raw material.

3. The production method according to claim 2, wherein the mold comprises a pair of dies, and the method comprises:

    applying the two or more release agents to an inner surface of at least one of the dies,
    introducing the polyurethane foam raw material into the interior of the mold, and
    reacting the polyurethane foam raw material.

4. The production method according to claim 2 or 3, wherein the two or more release agents comprise a release agent (I) having a melting peak temperature of 40 °C or more and less than 70 °C, and a release agent (II) having a melting peak temperature of 80 °C or more and 130 °C or less.

5. The production method according to claim 4, wherein at least one of the release agent (I) and the release agent (II) has two or more melting peak temperatures.

6. The production method according to claim 4 or 5, wherein the release agent (I) has two melting peak temperatures and the melting peak temperature on the low-temperature side thereof is 40 °C or more and less than 70 °C, and
the release agent (II) has at least one melting peak temperature between the two melting peak temperatures of the release agent (I).

7. The production method according to any one of claims 4 to 6, wherein a mass ratio of the release agent (I) to a total mass of the release agent (I) and the release agent (II) is 0.60 or more and 0.97 or less.

8. The production method according to any one of claims 4 to 7, wherein the release agent (I) is a release agent with which a surface open cell ratio of 0% or more and less than 10% can be obtained when a polyurethane foam is produced using only the release agent (I) as the release agent, and
the release agent (II) is a release agent with which a surface open cell ratio of 10% or more and 60% or less can be obtained when a polyurethane foam is produced using only the release agent (II) as the release agent.

9. The production method according to any one of claims 2 to 8, wherein the polyurethane foam raw material contains a polyol component (A), a polyisocyanate component (B), a catalyst (C), a foam stabilizer (D), and a blowing agent (E).

**INTERNATIONAL SEARCH REPORT**

International application No. **PCT/JP2025/001032**

**A. CLASSIFICATION OF SUBJECT MATTER**

***C08G 18/00***(2006.01)i; *C08G 101/00*(2006.01)n
FI: C08G18/00 F; C08G18/00 M; C08G101:00

According to International Patent Classification (IPC) or to both national classification and IPC

**B. FIELDS SEARCHED**

Minimum documentation searched (classification system followed by classification symbols)

C08G18/00; C08G101/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-007680 A (NHK SPRING CO., LTD.) 12 January 2006 (2006-01-12) examples 2, 4-6 | 1<br>2-9 |
| X<br>Y | JP 08-245742 A (NHK SPRING CO., LTD.) 24 September 1996 (1996-09-24) claim 1, paragraph [0011], fig. 4, example 1 | 1<br>2-9 |
| Y | JP 2013-246182 A (INOAC CORP.) 09 December 2013 (2013-12-09) examples 1-7 | 2-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2025** | **18 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/001032**

| Patent document cited in search report | Publication date (day/month/year) | Patent family member(s) | Publication date (day/month/year) |
|---|---|---|---|
| JP 2006-007680 A | 12 January 2006 | (Family: none) | |
| JP 08-245742 A | 24 September 1996 | (Family: none) | |
| JP 2013-246182 A | 09 December 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012008225 A


### Non-patent literature cited in the description


- **GUNTER OERTEL**. Polyurethane Handbook. Hanser Publisher, 1985, 161-233
- **KEIJI IWATA**. Polyurethane Resin Handbook. Nikkan Kogyo Shimbun, Ltd, 1987, 150-221
- **GUNTER OERTEL**. Polyurethane Handbook. Hanser Publisher, 1985, 184-191, 212-218
- **KEIJI IWATA**. Polyurethane Resin Handbook. Nikkan Kogyo Shimbun, Ltd., 1987, 160-166, 186-191
- **GUNTER OERTEL**. Polyurethane Handbook. Hanser Publisher, 1985, 223-233
- **KEIJI IWATA**. Polyurethane Resin Handbook. Nikkan Kogyo Shimbun, Ltd., 1987, 211-221
- **GUNTER OERTEL**. Polyurethane Handbook. Hanser Publisher, 1985, 234-313
- **KEIJI IWATA**. Polyurethane Resin Handbook. Nikkan Kogyo Shimbun, Ltd., 1987, 224-283